Europäisches Patentamt

European Patent Office

Office européen des brevets

(19)

(11) Publication number: **0 083 177**
**B1**

## (12) EUROPEAN PATENT SPECIFICATION

(45) Date of publication of patent specification: **17.07.85**

(51) Int. Cl.⁴: **B 29 C 67/20**

(21) Application number: **82306726.9**

(22) Date of filing: **16.12.82**

(54) Method for producing polystyrene resin foam.

(30) Priority: **25.12.81 JP 209317/81**

(43) Date of publication of application:
**06.07.83 Bulletin 83/27**

(45) Publication of the grant of the patent:
**17.07.85 Bulletin 85/29**

(84) Designated Contracting States:
**DE FR GB**

(56) References cited:
**DD-A- 114 926**
**DD-A- 144 734**
**DE-A- 900 609**
**FR-A- 95 884**
**US-A-3 624 192**
**US-A-3 954 929**
**US-A-4 324 748**

(73) Proprietor: **Japan Styrene Paper Corporation**
**1-1, 2-chome, Uchisaiwai-cho**
**Chiyoda-ku Tokyo (JP)**

(72) Inventor: **Hatakeyama, Hidewo**
**11-31, Nishiyawata 1-chome**
**Hiratsuka-shi Kanagawa-ken (JP)**
Inventor: **Yamamoto, Toru**
**1-106, 2-ban Kita 25-jyo Higashi 20-chome**
**Sapporo-shi Hokkaido (JP)**

(74) Representative: **Myerscough, Philip Boyd et al**
**J.A.Kemp & Co. 14, South Square Gray's Inn**
**London, WC1R 5EU (GB)**

Courier Press, Leamington Spa, England.

## Description

This invention relates to a method for producing polystyrene resin foams, especially thick foams, by an extrusion-forming technique.

A thick foam of a polystyrene resin is produced by an extrusion forming technique generally by injecting a volatile blowing agent into a melt of the polystyrene resin in an extruder, heating and mixing them, extruding the molten mixture through a die, and passing the extrudate through a shaping device secured to the end of the die exit to cool and shape it. The molten resin containing the blowing agent is continuously extruded through the die exit, and fills the shaping device while expanding. The extrudate advances toward the exit of the shaping device while making contact with the internal wall of the shaping device so that the thickness of the polystyrene resin foam is restricted by the height of the space of the device, and after leaving the shaping device, the foam is taken up (see, for example, U.S. Pat. No. 3,954,929).

Such a shaping device is usually made of a metal such as iron. However, since the frictional resistance of the metal to the molten mixture is high, a polystyrene resin foam having a good surface cannot be obtained. To solve this problem, it has been the previous practice to coat the inside surface of the metallic body of the shaping device with a fluorocarbon resin. For a short limited period, such a shaping device can produce polystyrene resin foams with a good surface condition, but because the fluorocarbon resin coating is rapidly consumed by friction, the shaping device must be coated again after a short period of time.

It is an object of this invention therefore to provide a method of extrusion and foaming which gives a polystyrene resin foam having a good surface condition.

The object of this invention is achieved by a method for producing a polystyrene resin foam expanded to a predetermined dimension which comprises extruding a melt of a polystyrene resin containing a blowing agent through a die of an extruder and passing the extrudate through a shaping device located exteriorly of the extruder and secured to the discharge end of the extruder while expanding and solidifying the molten mass so that it fills the shaping device, characterized in that at least a part of that area of the inside surface of the shaping device with which the expanded resin makes contact is formed of a plate of a fluorocarbon resin, said plate being secured to the inside surface of the shaping device by fitting portions, said fitting portions having a sufficient space for absorbing an increase in the volume of the fluorocarbon resin plate at the temperature of extrusion forming, and that the blowing agent is a mixture of 5 to 10 parts by weight of dichlorodifluoromethane and 2 to 4 parts by weight of methyl chloride and/or 2 to 4 parts by weight of ethyl chloride and is used in said amounts per 100 parts by weight of the polystyrene resin.

It is important that in the shaping device secured to the discharge end of the extruder in an apparatus used in performing the method of this invention, that surface of the shaping device which makes contact with the expanded resin is formed of a thick plate of a fluorocarbon resin, and that the fitting portions connected to the metallic body of the shaping device have sufficient room space for absorbing an increase in the volume of the resin plate at the temperature of extrusion forming.

When a thick fluorocarbon resin sheet is simply bonded to the inside surface of the shaping device, warpage occurs in the resin sheet due to the difference in thermal expansion between the metal and the resin sheet at the temperature of extrusion, and polystyrene resin foams of good quality cannot be obtained. Moreover, the resin sheet and the metal are frequently delaminated, and the shaping device becomes useless.

Since the inside surface of the shaping device used in this invention is made of a fluorocarbon resin plate, it has low frictional resistance, and therefore can give a foam having a smooth and beautiful surface. The shaping device can withstand use for a much longer period of time than similar devices having a surface coating of fluorocarbon. Moreover, because the fluorocarbon resin plate forming the inside surface of the shaping device is not merely bonded to the metallic body of the device, the shaping device in accordance with this invention can be continuously operated stably without causing delamination or warpage due to differences in thermal expansion during extrusion.

The conventional shaping device must be externally cooled or heated for temperature adjustment in order to obtain good foams. In contrast, the shaping device in accordance with this invention requires no such external temperature control. The fluorocarbon resin plate in the shaping device in this invention can be easily mounted and detached as desired.

A polystyrene resin foam having a good surface condition can be obtained by using the shaping device in accordance with this invention and by using a resin-blowing agent formulation consisting of 100 parts by weight of the polystyrene resin, 5 to 10 parts by weight, preferably 5 to 8 parts by weight, of dichlorodifluoromethane, 2 to 4 parts by weight, preferably 2 to 3 parts by weight, of methyl chloride, and/or 2 to 4 parts by weight, preferably 2 to 3 parts by weight, of ethyl chloride.

The shaping device in accordance with this invention is decribed specifically below with reference to the accompanying drawings showing one embodiment of an apparatus used in this invention in which the top and bottom portions of the shaping device are made of metal and its sides are made of a fluorocarbon resin, and a fluorocarbon resin plate is secured to the inside surfaces of the top and bottom portions.

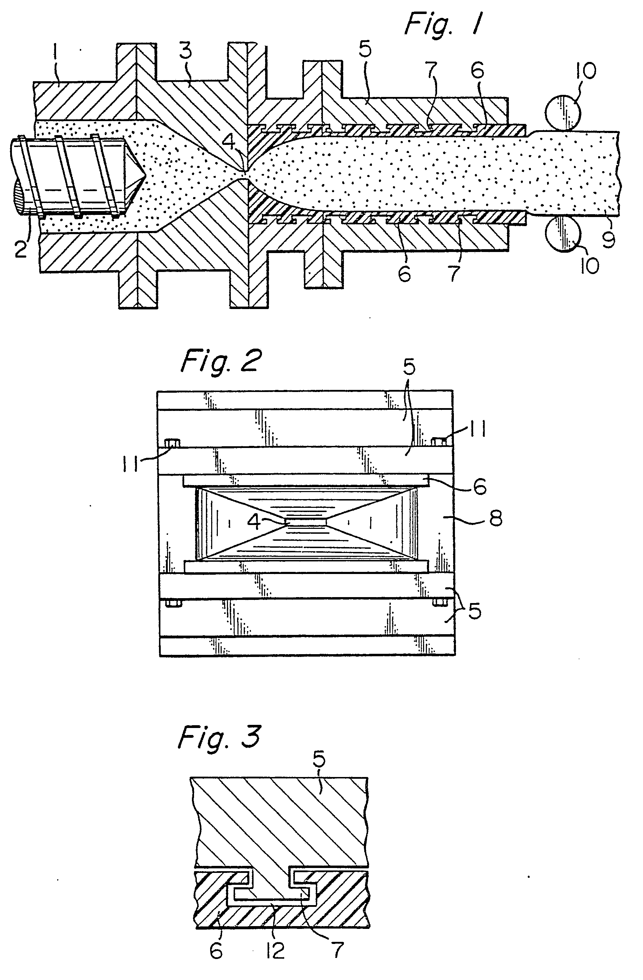

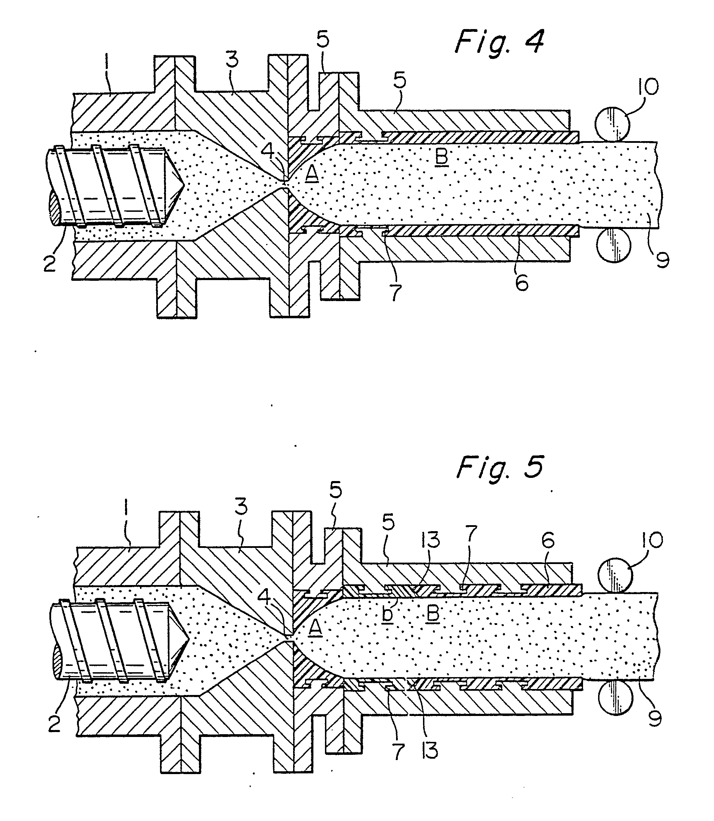

Fig. 1 is a sectional view showing the shaping device secured to the die exit of an extruder; Fig. 2 is a front elevation thereof; Fig. 3 is an enlarged partial sectional view showing how a fluorocarbon resin plate is secured to the body of the shaping device; Figs. 4 and 5 show modifications of the shaping device shown in Fig. 1.

In the drawings, the reference numerals designate the members as follows: 1, the body of an extruder; 2, a screw; 3, a die; 4, a lip; 5, metal constituting the body of a shaping device; 6, a fluorocarbon resin plate constituting the top and bottom inside surfaces of the shaping device; 7, protrusions; 8, a fluorocarbon resin plate constituting the inner side surfaces of the shaping device; 9, a foam of a polystyrene resin; 10, a pair of take-up rolls; 11, clamping bolts; and 12, depressions.

Referring to Figs. 4 and 5 showing other embodiments of the fluorocarbon resin plate in the shaping device in accordance with this invention, the shaping device consists of a foaming chamber A and shape-arranging chamber B. The number of fitting portions which receive the fluorocarbon resin plate provided on the inside surface of the shape-arranging chamber B may be one, as shown in Fig. 4. When the fitting portion for the fluorocarbon resin plate is formed at one place (one both at the top and bottom parts), such fitting portions are provided in the shape-arranging chamber of the shaping device at positions near the foaming chamber, as shown in Fig. 4.

When the shaping device in accordance with this invention is operated continuously for a long period of time, that portion of the resin plate which is in the foaming chamber and in the shape-arranging chamber at a position near the foaming chamber (the portion shown by b in Fig. 5) may sometimes undergo wear, leading to the difficulty of providing a good foam. In such a case, it is economically disadvantageous to replace all of the resin plate. To avoid this disadvantage, in the embodiment shown in Fig. 5, the resin plate provided in the shape-arranging chamber is divided into two or more portions joined at a bonding portion 13, so that in the event of repair, only the portion b of the resin plate in the shape-arranging chamber need be replaced.

To secure the fluorocarbon resin plate 6 to the inside surface of the shaping device, it is necessary to provide a space between the fitting portions 7 for connecting the resin plate to the metallic body and the inside surface of the depressions 12 in the resin plates, the space being sufficient for absorbing the increase in the volume of the resin plate at the temperature of extrusion forming. Securing of the fluorocarbon resin plate may, for example, be effected by providing projections or protrusions 7 on the inside surface of the metallic body 5 and recesses or depressions 12 on the resin plate, and fitting the protrusions 7 into the depressions 12. Alternatively, depressions can be provided on the inside surface of the metallic body and protrusions on the resin plate, and the protrusions are fitted into the depression. Or there may also be used a method which comprises providing groove-like depressions both on the inside surface of the metallic body and the resin plate, bringing the grooved portions of the two elements face-to-face, and inserting stops into the groove-like depressions. The protrusions on the inside surface of the metallic body or the fluorocarbon resin plate may be provided continuously or discontinuously in various configurations. Usually, each protrusion has the shape of a railroad rail disposed at right angles to the extruding direction of the foam in the shaping device. Other shapes, such as a mushroom-like shape or hook-like shape, are also possible. The corresponding depressions are usually groove-like, but may be of other shapes conforming to the shapes of the protrusions.

In securing the fluorocarbon resin plate to the metallic body of the shaping device in this invention in the various modes exemplified hereinabove, it is necessary to provide between the fitting portion and the inside surface of the depressions sufficient room or space for absorbing an increase in the volume of the resin plate at the temperature of extrusion. This is important for preventing delamination or warpage of the resin plate owing to thermal expansion at the time of producing a polystyrene resin foam. The space may be equal to, or greater than, the increase of the volume of the resin plate which may be caused by thermal expansion at the temperature of extrusion molding. The space is filled by the thermal expansion of the resin plate at the time of extrusion molding, or partly filled so as to leave only a small space, and in this state, the resin plate is united integrally with the metallic body. Since the thermal expansion of the metal at the temperature of extrusion molding is much lower than that of the resin plate, the expansion of the metal body can be ignored in actually determining the magnitude of the space around the fitting portion.

Preferably, the magnitude of the space for absorbing the increase in the volume of the resin plate at the temperature of extrusion forming becomes gradually larger the nearer its location to the discharge end of the shaping device.

In the shaping device in this invention, the fluorocarbon resin plate can be designed such that it extends beyond the end portion of the metallic body at the discharge end of the shaping device and its forward end is located close to a pair of take-up rolls 10, as shown in Fig. 1. This construction permits production of a polystyrene resin foam having a smooth and beautiful surface and retaining the desired thickness restricted by the shaping device.

The fluorocarbon resin plates may also be secured to the inner side surfaces of the shaping device by the provision of grooves or protrusions in the metallic body as in the top and bottom surfaces of the shaping device. Or it is possible to form the top and bottom portions of the shaping device using metal plates and fluorocarbon resin

plates secured thereto, and to form its side portions of fluorocarbon resin plates alone and which are secured to the top and bottom portions by means of bolts, etc.

The magnitude of the aforesaid space around the fitting portion is specifically explained below with reference to an example of the shaping device used in this invention which is composed of a metallic body of iron and a plate of polytetrafluoroethylene secured thereto by the provision of rail-like continuous projections in the metallic body and groove-like depressions having the corresponding shape in the polytetrafluoroethylene plate. For example, in the production of a foam at an extrusion-forming temperature of 110°C. using a polytetrafluoroethylene plate having a thickness of 20 mm, a width of 350 mm, and a length of 450 mm in the shaping device, the polytetrafluoroethylene plate is secured to the inside surface of the shaping device by providing five spaces between the projections formed on the metallic body and the depressions provided in the resin plate, each space having a magnitude of about 0.2 mm in the thickness direction, about 1.6 mm (a total of 3.2 mm) in the widthwise direction on each side of the projection, and about 0.4 mm (a total of 0.8 mm) in the lengthwise direction on each side of the projection. These spaces substantially disappear as a result of the expansion of the resin plate at the time of extrusion molding, and cause no trouble during the forming operation. The extrusion forming operation can be performed continuously over long periods of time, and polystyrene resin foams of good quality can be obtained without any damage to the shaping device even when the operation is performed continuously for three months.

Suitable fluorocarbon resin plates for use in this invention are, for example, a plate of poly(tetrafluoroethylene), a plate of a tetrafluoroethylene/hexafluoropropylene copolymer and a plate of a tetrafluoroethylene/perfluoroalkylvinyl ether copolymer. The thickness of the resin plate is 5 mm to 50 mm, preferably 10 mm to 40 mm.

The metal which constitutes the outside wall of the shaping device of this invention includes, for example, iron, brass, stainless steel, and aluminum alloys.

In the present invention it is recommended to use a mixed volatile blowing agent consisting of 5 to 10 parts by weight of dichlorofluoromethane and 2 to 4 parts by weight of methyl chloride and/or 2 to 4 parts by weight of ethyl chloride per 100 parts by weight of the polystyrene resin. This blowing agent formulation, in conjunction with the shaping device in accordance with this invention, gives a polystyrene foam having a smooth, dense surface.

### Example

One hundred parts by weight of polystyrene and 0.1 part by weight of a cell regulating agent composed of an equimolar mixture of monosodium citrate and sodium hydrogen carbonate were fed into an extruder having an inside cylinder diameter of 120 mm.

Separately, 12 parts by weight, per 100 parts by weight of the polystyrene, of a mixed blowing agent consisting of 60% by weight of dichlorofluoromethane, 20% by weight of methyl chloride and 20% by weight of ethyl chloride was forced into the extruder from a blowing agent injecting opening.

The foamable molten gel uniformly kneaded in the extruder was extruded into the outer atmosphere at 110°C from a die orifice having a width of 600 mm and a clearance of 6 mm and attached to the exit of the extruder, and further passed through a shaping device attached to the extruder to form a plate-like foam having a cross-sectional size of 1200 mm in width and 28 mm in thickness. The upper and lower walls of the shaping device were made of iron, and its both side walls were made of a polytetrafluoroethylene plate and fitted in the upper and lower wall surfaces. Five rail-like spaces were provided between projections formed on the iron wall surface and depressions formed on the resin plate, and each space had a magnitude of about 0.2 mm in the thickness direction and 0.4 mm (a total of 0.8 mm) in the longitudinal direction on each side of the projection. These spaces substantially disappeared as a result of the expansion of the resin plate during the extrusion forming. The extrusion forming operation could be continuously performed smoothly over a long period of time, and good foams were obtained during the three months' continuous operation without any damage to both of the foamed plate and the shaping device.

### Comparative Example

The procedure of Example was followed except that instead of using the polytetrafluoroethylene plate, the shaping device was made of iron on all sides, and its inside surface was coated with polytetrafluoroethylene. During the initial stage of the extrusion, foams of good quality were obtained, but after the lapse of three days, the surfaces of the resulting foams gradually become rough. One week later, the inside surface of the shaping device had to be again coated with the polytetrafluoroethylene.

**Claims**

1. A method for producing a polystyrene resin foam expanded to a predetermined dimension which comprises extruding a melt of a polystyrene resin containing a blowing agent through a shaping device located exteriorly of an extruder and secured to the discharge end of the extruder while expanding and solidifying the molten mass so that it fills the shaping device, characterized in that

at least a part of that area of the inside surface of the shaping device with which the expanded resin makes contact is formed of a plate of a fluorocarbon resin, said plate being secured to the inside surface of the shaping device by fitting portions, said fitting portions having a sufficient space for absorbing an increase in the volume of the fluorocarbon resin plate at the temperature of extrusion molding, and

the blowing agent is a mixture of 5 to 10 parts by weight of dichlorodifluoromethane and 2 to 4 parts by weight of methyl chloride and/or 2 to 4 parts by weight of ethyl chloride and is used in said amounts per 100 parts by weight of the polystyrene resin.

2. A method according to claim 1 wherein the fluorocarbon resin plate extends beyond the discharge end of the shaping device, and the end portion of the resin plate is located close to a pair of take-up rolls outside the shaping device.

3. A method according to claim 1 or 2 wherein projections are provided on the inside surface of that part of the shaping device which is made of metal, depressions are formed in the fluorocarbon resin plate, and the fluorocarbon resin plate is secured to the inside surface of the shaping device by fitting the projections into the depressions.

4. A method according to claim 1 or 2 wherein depressions are provided in the inside surface of that part of the shaping device which is made of metal, projections are formed in the fluorocarbon resin plate, and the fluorocarbon resin plate is secured to the inside surface of the shaping device by fitting the projections into the depressions.

5. A method according to claim 1 or 2 wherein grooves are provided on the inside surface of that part of the shaping device which is made of metal and on the fluorocarbon resin plate, and the fluorocarbon resin plate is secured to the inside surface of the shaping device by positioning the grooves oppositely and fitting stops into the grooves.

6. A method according to claim 3 or 4 wherein the projections are rail-like projections extending continuously at right angles to the lengthwise direction of the shaping device.

7. A method according to claim 3 or 4 wherein the projections are discontinuous.

8. A method according to claim 3 or 4 wherein the depressions are continuous grooves.

9. A method according to claim 3 or 4 where the depressions have a shape suitable for receiving the corresponding projections, and are individually provided at points opposed to the projections.

10. A method according to any one of the preceding claims wherein the fluorocarbon resin plate is provided such that the fit of the fitting portions becomes progressively looser toward the discharge end of the shaping device.

**Patentansprüche**

1. Verfahren zur Herstellung von Polystyrol-Schaumstoffen, expandiert in vorbestimmten Umfang, durch Extrudieren einer Schmelze eines Polystyrolharzes enthaltend ein Treibmittel durch eine Formvorrichtung, die sich außerhalb des Extruders befindet und am Austrittsende des Extruders befestigt ist, wobei die Schmelze so expandiert und verfestigt wird, daß sie die Formvorrichtung ausfüllt, dadurch gekennzeichnet, daß zumindest ein Teil des Bereichs der Innenfläche der Formvorrichtung, die mit dem aufgeschäumten Harz in Berührung kommt, aus einer Platte eines Fluorkohlenstoffharzes gebildet ist, welche durch Passteile an der Innefläche der Formvorrichtung fixiert ist, wobei die Passteile einen ausreichenden Raum für die Aufnahme einer Volumenzunahme der Fluorkohlenstoffharz-Platte bei der Temperatur des Extrudierens besitzt, und das Treibmittel ein Gemisch von 5 bis 10 Gewichtsteilen Dichlordifluormethan und 2 bis 4 Gewichtsteilen Methylchlorid und/oder 2 bis 4 Geweichtsteilen Ethylchlorid ist, bezogen auf 100 Gewichtsteile Polystyrolharz.

2. Verfahren nach Anspruch 1, wobei sich die Fluorkohlenstoffharz-Platte über das Austrittsende der Formvorrichtung erstreckt und der Endteil der Harzplatte in unmittelbarer Nähe eines Paars von Aufnahmerollen außerhalb der Formvorrichtung sich befindet.

3. Verfahren nach Anspruch 1 oder 2, wobei Erhebungen an der Innenfläche des Teils der Formvorrichtung, der aus Metall besteht, und Vertiefungen in der Fluorkohlenstoffharz-Platte vorgesehen sind und die Fluorkohlenstoffharz-Platte an der Innenfläche der Formvorrichtung durch Eingriff der Erhebungen in die Vertiefungen fixiert ist.

4. Verfahren nach Anspruch 1 oder 2, wobei Vertiefungen an der Innenfläche des Teils der Formvorrichtung, der aus Metall besteht, und Erhebungen in der Fluorkohlenstoffharz-Platte vorgesehen sind und die Fluorkohlenstoff-Platte an der Innenfläche der Formvorrichtung durch Eingriff der Erhebungen in die Vertiefungen fixiert ist.

5. Verfahren nach Anspruch 1 oder 2, worin Nuten an der Innenfläche des Teils der Formvorrichtung, der aus Metall besteht, und an der Fluorkohlenstoffharz-Platte vorgesehen sind und die Fluorkohlenstoffharz-Platte an der Innenfläche der Formvorrichtung fixiert ist, indem die Nuten gegenüber angeordnet sind und in den Nuten sperrende Einlagen eingepaßt sind.

6. Verfahren nach Anspruch 3 oder 4, wobei die Erhebungen schienenartig sind und sich im rechten Winkel zur Längsrichtung der Formvorrichtung ununterbrochen erstrecken.

7. Verfahren nach Anspruch 3 oder 4, worin die Erhebungen unterbrochen sind.

8. Verfahren nach Anspruch 3 oder 4, worin die Vertiefungen ununterbrochene Nuten sind.

9. Verfahren nach Anspruch 3 oder 4, worin die Vertiefungen eine Form entsprechend den zugeordneten Erhebungen aufweisen und jeweils an Stellen gegenüber den Erhebungen angeordnet sind.

10. Verfahren nach einem der vorhergehenden Ansprüche, worin die Fluorkohlenstoffharz Platte derart ausgestattet ist, daß der Sitz der Paßteile zunehmend geringer wird gegen das Austragende der Formvorrichtung.

**Revendications**

1. Procédé de fabrication d'une mousse de résine de polystyrène dilatée à une dimension prédéterminée, qui comprend l'extrusion d'une masse fondue d'une résine de polystyrène contenant un agent porogène à travers un dispositif de façonnage disposé à l'extérieur d'une extrudeuse et fixé à l'extrémité de décharge de l'extrudeuse, tout en dilatant et en solidifiant la masse fondue de façon qu'elle remplisse le dispositif de façonnage, caractérisé en ce qu'au moins une partie de la zone de la surface intérieure du dispositif de façonnage avec laquelle la résine dilatée vient en contact est formée en une plaque de résine fluorée, ladite plaque étant fixée à la surface intérieure du dispositif de façonnage par des portions d'emboîtement, lesdites portions d'emboîtement présentant un espace suffisant pour absorber une augmentation du volume de la plaque de résine fluorée à la température du moulage par extrusion, et en ce que l'agent porogène est une mélange de 5 à 10 parties en poids de dichlorodifluorométhane et 2 à 4 parties en poids de chlorure de méthyle et/ou 2 à 4 parties en poids de chlorure d'éthyle et est utilisé en ces proportions par 100 parties en poids de la résine de polystyrène.

2. Procédé selon la revendication 1, dans lequel la plaque de résine fluorée s'étend au delà de l'extrémité de décharge du dispositif de façonnage, et la partie terminale de la plaque de résine est placée tout près d'une paire de rouleaux de reprise à l'extérieur du dispositif de façonnage.

3. Procédé selon la revendication 1 ou 2, dans lequel on prévoit des bossages sur la surface intérieure de la partie du dispositif de façonnage qui est en métal, on forme des renfoncements dans la plaque de résine fluorée et on fixe la plaque de résine fluorée à la surface intérieure du dispositif de façonnage en emboîtant les bossages dans les renfoncements.

4. Procédé selon la revendication 1 ou 2, dans lequel on prévoit des renfoncements dans la surface intérieure de la partie du dispositif de façonnage qui est en métal, on forme des bossages sur la plaque de résine fluorée et on fixe la plaque de résine fluorée à la surface intérieure du dispositif de façonnage en emboîtant les bossages dans les renfoncements.

5. Procédé selon la revendication 1 ou 2, dans lequel on pratique des gorges dans la surface intérieure de la partie du dispositif de façonnage qui est en métal et dans la plaque de résine fluorée et on fixe la plaque de résine fluorée à la surface intérieure du dispositif de façonnage en plaçant les gorges en regard les unes des autres et en emboîtant des butées dans les gorges.

6. Procédé selon la revendication 3 ou 4, dans lequel les bossages sont en forme de rails s'étendant continuellement dans une direction perpendiculaire à la direction longitudinale du dispositif de façonnage.

7. Procédé selon la revendication 3 ou 4, dans lequel les bossages sont discontinus.

8. Procédé selon la revendication 3 ou 4, dans lequel les renfoncements sont des gorges continues.

9. Procédé selon la revendication 3 ou 4, dans lequel les renfoncements ont une forme appropriée pour recevoir les bossages correspondants et sont prévus individuellement en des points faisant face aux bossages.

10. Procédé selon l'une quelconque des revendications précédentes, dans lequel la plaque en résine fluorée est agencée de manière que l'ajustage des portions d'emboîtement prenne progressivement du jeu ver l'extrémité de décharge du dispositif de façonnage.

_Fig. 1_

_Fig. 2_

_Fig. 3_

*Fig. 4*

*Fig. 5*